# EUROPEAN PATENT APPLICATION

(11) **EP 2 621 229 A1**
(43) Date of publication of application: **31.07.2013**
(21) Application number: 12305087.4
(22) Date of filing: 24.01.2012
(51) Int. Cl.: H04W 60/06

(54) **Process for managing the presence of mobile terminals in the coverage area of at least one cellular base station in a network**

(71) Applicant: Alcatel Lucent, 75007 Paris (FR)
(72) Inventor: Joubert, Eric, 91620 Nozay (FR); Gaste, Yann, 91620 Nozay (FR)
(74) Representative: Sayettat, Julien Christian

(57) **Abstract**

Process for managing the presence of mobile terminals (4) in the coverage area of at least one cellular base station (1) in a network, said process providing for sending regularly through said cellular base station a new Local Location Area Coding iDentifier (LLACiD), so that each mobile terminal (4) being in said coverage area detects said new identifier and signals its presence by sending back a Location Update message (7), said process further providing for sending to a network core (2) through said cellular base station:
- a nominal Location Update message (8) for each of said mobile terminals that have signalled their presence by sending back a Location Update message (7);
- a Detach information message (9) for each of said mobile terminals that have not signalled their presence.

## Description

The invention relates to a process for managing the presence of mobile terminals in the coverage area of at least one cellular base station in a network and to a cellular base station managing the presence of mobile terminals according to such a process.

Telecommunications service providers usually use cellular base stations, such as femtocells, to extend their coverage location in areas where access would otherwise be limited, unavailable or inappropriate. To do so, service providers connect such cellular base stations to their network, for example via broadband connection such as cable connection or Digital Subscriber Line (DSL) connection.

In particular, for mobile operators, such cellular base stations not only improve their coverage and capacity, but also allow the use of new Application Programming Interfaces (API), such as Presence Information applications, notably for implementing in their networks new breeds of applications and services based on the presence of mobile terminals within the coverage area of precise base stations of said networks.

Thus, presence detection of mobile terminals within the coverage area of a cellular base station is an important information offering significant opportunities for at least new location-based applications.

Detection of the presence of mobile terminals within the coverage area of a given cellular base station is usually based on the standardized protocol exchanges. Thus, each time a mobile terminal executes a procedure with a core of the network through the cellular base station, the presence of this mobile terminal within the coverage area of said cellular base station can be deduced.

Depending of the network, the network core can be for example a Circuit Switched (CS) network core, if said network is a network according to the Global System for Mobile communications (GSM) standard. The network core can also be a Packet Switched (PS) network core, if the network is a network according to the General Packet Radio Services (GPRS) standard. Moreover, if the network is a network according to the Wideband Code Division Multiple Access Evaluation (WCDMA) standard, the network core can be either a Packet Switched one or a Circuit Switched one.

Within such types of networks, the procedure executed by the mobile terminal can be a procedure according to the Non-Access Stratum (NAS) protocol. In particular, the procedure can be a NAS Attach procedure for entering the coverage area of the cellular base station. The NAS procedure can also be a NAS Routing Update procedure or a Location Update procedure, for indicating a change in the presence of the mobile terminal, said change being respectively a change of routing area and a change of location area within the network.

Moreover, when the mobile terminal is in idle mode, it goes on generating regular Location Update and/or Routing Update procedures at a frequency depending on the configuration choices of the mobile operator. For example, some network operators may choose to completely inhibit such regular update procedures, so that mobile terminals in idle mode can remain completely quiet during long periods.

Similarly, when a mobile device executes a NAS Detach procedure, the cellular base station is capable of informing the network core that the presence information of said mobile terminal is no more valid.

However, presence information of mobile terminals is not always reliable. In particular, when a mobile terminal leaves the coverage area of a cellular base station, said mobile terminal does not automatically generate any detach request procedure, so that said cellular base station considers that said mobile terminal is still present in its coverage area.

Moreover, some mobile terminals do not generate such a detach request procedure when they are switched off, which leads to the same problem. Besides, while entering the coverage area of a cellular base station, a mobile terminal does not generate an update procedure. Indeed, a mobile terminal generally generates a location update procedure when entering the coverage area of a cellular base station only if said base station belongs to a different location area than the previous one.

Document FR-2 925 999 proposes a solution wherein, when entering a new location area of a network, especially an area covered by a new cellular base station, a mobile terminal sends to said cellular base station a Location Update message comprising information about the Location Area Coding Identifier (LACiD) of the previous cellular base station and the LACiD of the new cellular base station.

Moreover, this document provides a system that allows the recovering of these information between the Base Transceiver Station (BTS) and the Visitor Location Register (VLR) database of the network. Thus, the presence server of the network can be updated and the system can know and notify that the mobile terminal is no more located in the coverage area of the previous cellular base station.

Nevertheless, this solution cannot cover the case of a mobile terminal that is switched off without generating any detach procedure. Besides, this solution cannot cover the case of a cellular base station which is isolated in the network, for example because said cellular base station is not covered by a macro cellular base station of said network.

Indeed, in those above mentioned cases, mobile terminals are not moving in the coverage area of a new cellular base station, so that they cannot be detected in a new location area of the network. This problem is particularly troublesome in that cellular base stations, especially femtocells, are often deployed to cover relatively isolated areas of a network.

Besides, with this solution, a mobile terminal entering in the coverage area of a new cellular base station which has the same LACiD of the previous one will not send any Location Update message, so that the former cellular base station may consider that said mobile terminal is still present within its coverage area.

Another solution have been proposed, which provides a regular mechanism within a network, wherein artificial paging messages (not linked to an incoming call) are sent to terminal mobiles that are supposed to be idle mode, in order to verify if said mobile terminals answer to them.

However, this solution is not fully satisfying, because it generates additional paging loads towards all the mobile terminals present in the coverage areas of the concerned cellular base stations. Moreover, this solution requires a specific handling of the response to this artificial paging message.

The invention aims to improve the prior art by proposing a process that consolidates the presence information of a mobile terminal under the coverage of a cellular base station in a network, so as to allow notably the development of cell presence based applications.

For that purpose, and according to a first aspect, the invention relates to a process for managing the presence of mobile terminals in the coverage area of at least one Cellular base station in a network, said process providing for sending regularly through said Cellular base station a new Local Location Area Coding iDentifier, so that each mobile terminal being in said coverage area detects said new LLACiD identifier and signals its presence by sending back a Location Update message, said process further providing for sending to the core of the network through said Cellular base station:
- a nominal Location Update message for each of said mobile terminals that have signalled their presence by sending back a Location Update message;
- a Detach information message for each of said mobile terminals that have not signalled their presence.

According to a second aspect, the invention relates to a cellular base station managing the presence of mobile terminals in a coverage area in a network, said Cellular base station comprising means for sending regularly a new Local Location Area Coding iDentifier (LLACiD), said Cellular base station further comprising means for receiving Location Update messages sent back by mobile terminals that have detected said new LLACiD identifier and means for sending to the core of the network:
- a nominal Location Update message for each of said mobile terminals that have signalled their presence by sending back a Location Update message;
- a Detach information message for each of said mobile terminals that have not signalled their presence.

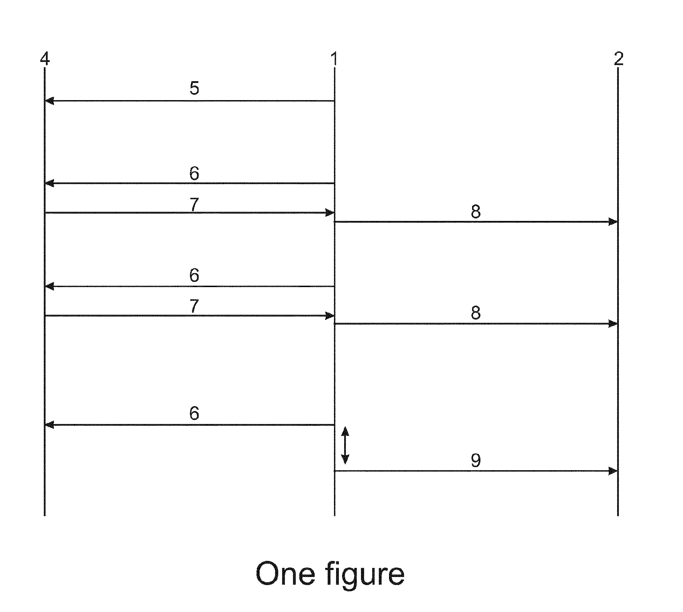

Other aspects and advantages of the invention will become apparent in the following description made with reference to the appended figure representing schematically the steps of a process according to the invention.

In relation to this figure, a process for managing the presence of mobile terminals in the coverage area of at least one cellular base station 1 in a network will be described below. The cellular base station 1 can be notably a femtocell.

Each cellular base station 1 belongs to a fixed location area of the network, said location area being covered by a network core 2. Depending on the type of the network, the network core 2 can be a Circuit-Switched (CS) core network or a Packet-Switched (PS) core network. In particular, the network can be a 2G (Second Generation) network, a 3G (Third Generation) network, or a 4G (Fourth Generation) network.

In particular, each cellular base station 1 is assigned a Location Area Coding iDentifier (LACiD) corresponding to the location area of the network to which said cellular base station belongs. To do so, at initialization, the cellular base station 1 is assigned to a location area through provisioning parameters and thus receives the corresponding LACiD identifier at provisioning time.

The cellular base station 1 comprises a coverage area within the location area of the network core 2, wherein at least one mobile terminal 4 is present. In particular, the cellular base station 1 comprises means to send within its coverage area a Local Location Area Coding iDentifier (LLACiD), notably within a broadcast message 5, so that each mobile terminal 4 present in said coverage area can identify to which coverage area it belongs.

To do so, the cellular base station 1 can be previously assigned a range of LLACiD identifiers, the LLACiD identifier sent within the broadcast message 5 being chosen within said range.

The process further provides for sending regularly through the cellular base station 1 a new LLACiD identifier. To do so, the cellular base station 1 comprises means for sending regularly such a new LLACiD identifier, notably within a broadcast message 6.

The broadcast messages 5, 6 are common messages that are generally sent through common channels on the air interface between the cellular base station 1 and the mobile terminals 4 present in the coverage area of said base station. Thus, the process of the invention does not need the implementation of new types of messages and is fully transparent for mobile terminals 4.

In particular, the process can provide to send a new LLACiD identifier within a broadcast message 6 only when at least one mobile terminal 4 is in idle mode, the means for sending of the cellular base station 1 being thus adapted to send such a new LLACiD identifier only under this condition.

In particular, the new LLACiD identifier can be notably chosen within the range of LLACiD identifiers that have been previously assigned to the cellular base station 1.

Moreover, the new LLACiD identifier is dynamically and locally sent, so that each mobile terminal 4 being in the coverage area of the cellular base station 1 detects said new identifier and signals its presence by sending back a Location Update message 7. Thus, the mobile terminals 4 signal their presence to the cellular base station 1 as if they were roaming in the network and crossing a boundary between two areas.

The process further provides for sending to the network core 2 through the cellular base station 1:
- a nominal Location Update message 8 for each of the mobile terminals 4 that have signalled their presence by sending back a Location Update message 7;
- a Detach information message 9 for each of said mobile terminals that have not signalled their presence.

To do so, the cellular base station 1 comprises means for receiving Location Update messages 7 sent back by mobile terminals 4 that have detected the new LLACiD identifier and means for sending, for each of the mobile terminals 4 in the coverage area, a nominal Location Update message 8 or a Detach information message 9.

In particular, the nominal Location Update message 8 comprises the Location Area Coding iDentifier that has been previously assigned to the cellular base station 1. To do so, the means of the cellular base station 1 for sending a message to the network core 2 are adapted to build messages 8 by replacing the LLACiD identifier currently used in said cellular base station by the LACiD identifier of said cellular base station, so that the network core 2 could be aware of the presence of mobile terminals 4 that sent back a Location Update message 7.

According to an embodiment, the process provides for filtering at the cellular base station 1 level the Location Update messages 7 sent by mobile terminals 4 that have already signalled their presence in the coverage area.

To do so, the cellular base station 1 comprises means for filtering the Location Update messages 7 sent by such mobile terminals 4. Thus, only a ratio of the Location Update messages 7 may lead to the sending of a nominal Location Update message 8, which permits to avoid any additional load on the network core 2.

In particular, the process can provide that, if at least one mobile terminal 4 remains in idle mode, the cellular base station 1 sends a new LLACiD identifier within a broadcast message 6, so that mobiles terminals 4 in the coverage area of said cellular base station detect said new identifier and send back new Location Update messages 7.

Moreover, if a mobile terminal 4 does not signal its presence by sending back a Location Update message 7 in due time, the cellular base station 1 provides the information to the network core 2 by sending a Detach information message 9 for said mobile terminal, as if said mobile terminal had performed by itself a detach action towards the cellular base station 1. Thus, the mobile terminal 4 is no more considered as present in the coverage area of the cellular base station 1.

The process is based on standard mechanisms. No additional new message is needed and no downlink new signalling load is generated, since mobile terminals 4 signal regularly their presence in the network by themselves. Thus, the process is fully transparent at the network core 2 level.

The process further allows providing reliable presence information about the mobile terminals 4 in the network, which is particularly interesting for the implementation of applications using such information.

In particular, the process can be useful in case of urgent need of presence information. Indeed, by a dynamic change of LLACiD identifier through cellular base stations 1, the mobile terminals 4 are forced to generate location updates, so that their presence can be easily and quickly confirmed.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for managing the presence of mobile terminals (4) in the coverage area of at least one cellular base station (1) in a network, said process providing for sending regularly through said cellular base station a new Local Location Area Coding iDentifier (LLACiD), so that each mobile terminal (4) being in said coverage area detects said new identifier and signals its presence by sending back a Location Update message (7), said process further providing for sending to a network core (2) through said cellular base station:
- a nominal Location Update message (8) for each of said mobile terminals that have signalled their presence by sending back a Location Update message (7);
- a Detach information message (9) for each of said mobile terminals that have not signalled their presence.

2. Process according to claim 1, **characterized in that** the new LLACiD identifier is chosen within a range of LLACiD identifiers that are previously assigned to the cellular base station (1).

3. Process according to claim 1 or 2, **characterized in that** the nominal Location Update message (8) comprises a Location Area Coding iDentifier (LACiD) that is previously assigned to the cellular base station (1).

4. Process according to any of claims 1 to 3, **characterized in that** it provides for filtering at the cellular base station (1) level the Location Update messages (7) sent by mobile terminals (4) that have already signalled their presence in the coverage area.

5. Process according to any of claims 1 to 4, **characterized in that** the new LLACiD identifier is sent only when at least one mobile terminal (4) is in idle mode.

6. Cellular base station (1) managing the presence of mobile terminals (4) in a coverage area in a network, said cellular base station comprising means for sending regularly a new Local Location Area Coding iDentifier (LLACiD), said cellular base station further comprising means for receiving Location Update messages (7) sent back by mobile terminals (4) that have detected said new identifier and means for sending to a network core (2):
- a nominal Location Update message (8) for each of said mobile terminals that have signalled their presence by sending back a Location Update message (7);
- a Detach information message (9) for each of said mobile terminals that have not signalled their presence.

7. Cellular base station (1) according to claim 6, **characterized in that** the new LLACiD identifier is chosen within a range of LLACiD identifiers that are previously assigned to said cellular base station.

8. Cellular base station (1) according to claim 6 or 7, **characterized in that** the nominal Location Update message (8) comprises a Location Area Coding iDentifier (LACiD) that is previously assigned to said cellular base station.

9. Cellular base station (1) according to any of claims 6 to 8, **characterized in that** it further comprises means for filtering the Location Update messages (7) sent by mobile terminals (4) that have already signalled their presence in the coverage area.

10. Cellular base station (1) according to any of claims 6 to 9, **characterized in that** the means for sending are adapted to send a new LLACiD identifier only when at least one mobile terminal (4) is in idle mode.
